Europäisches Patentamt

European Patent Office

Office européen des brevets

(19)

(11) **EP 0 962 761 A2**

(12) **EUROPEAN PATENT APPLICATION**

(43) Date of publication:
08.12.1999 Bulletin 1999/49

(51) Int. Cl.$^6$: **G01N 22/04**

(21) Application number: 99201984.4

(22) Date of filing: 04.10.1990

(84) Designated Contracting States:
FR GB IT NL

(30) Priority: 04.10.1989 US 417658

(62) Document number(s) of the earlier application(s) in
accordance with Art. 76 EPC:
90914755.5 / 0 495 819

(71) Applicant:
AGAR CORPORATION INCORPORATED
Houston, Texas (US)

(72) Inventor: **Agar, Joram**
**Grand Cayman (KY)**

(74) Representative:
**Beresford, Keith Denis Lewis**
**BERESFORD & Co.**
**High Holborn**
**2-5 Warwick Court**
**London WC1R 5DJ (GB)**

Remarks:
This application was filed on 18 - 06 - 1999 as a
divisional application to the application mentioned
under INID code 62.

(54) **Oil/water measurement**

(57) A device for measuring the concentration of two substances through the transmission of electromagnetic waves. The device utilizes at least one transmission element for transmitting a signal and at least two receiving elements for receiving a signal from the at least one transmission element and providing first and second output signals. The present invention also utilizes a receiving device for receiving the first and second output signals form the at least two receiving elements such that the difference or ratio of the two signals is utilized to determine the concentration.

FIG.1.

EP 0 962 761 A2

## Description

The present invention relates to a device to measure content and velocity of aqueous and hydrocarbon mixtures in both oil-continuous and water-continuous phases.

There are numerous devices on the market which utilize the change in the dielectric constant to determine the amount of water in oil. These devices operate only in the oil-continuous phase, i.e. as long as the mixture behaves like a dielectric. However, as soon as the mixture changes to water-continuous, it stops being an insulator (dielectric) and the instrument indicates 100% water.

Other techniques which utilize optical principles suffer from a lack of sensitivity at the oil-continuous phase and cannot cope with thick oil build-up without frequent cleaning. Changes in the salinity of the water also tend to affect the absolute measurement of such parameters, e.g. refractive index, conductivity, dielectric constant, etc. Nuclear absorption, while giving good results with binary mixtures, are overmasked by heavy metallic contaminants, such as sulfur, vanadium, etc. Particle size in the water-continuous phase also plays an important part and affects the reading greatly.

US-A-4902961 describes a method and apparatus for determining the water content of crude oil in a pipeline. The device comprises an S-Band transmitter and receiver effective to transmit S-Band radiation across a pipeline containing the liquid, and an X-Band transmitter and receiver arranged to send X-Band radiation around a sidewall region of the pipeline. The amount of water in the pipe is determined from the values of the dielectric constants calculated from the transmission coefficients at the two frequencies.

EP-A-0154535 discloses an apparatus for determining the dielectric constant and/or conductivity of earth formations in a bore hole. The apparatus includes a transmitter which transmits electro-magnetic radiation within the range 10 MHz to 60 MHz down the bore hole. The signals from two receiver coils are used to calculate the dielectric constant and resistivity.

US-A-4423623 discloses a meter and method for measuring the composition and flow rate of a coal slurry. The coal slurry is arranged to flow through a waveguide, microwaves being propagated in the waveguide from a transmitter probe. Signals from a detector probe are used to determine the characteristic frequency of the waveguide. A further transmitter and detector are located in a different portion of the waveguide and used to determine characteristic frequencies at the different portion. The differences in the frequencies are used to determine the flow rate of the coal slurry.

US-A-3498112 discloses a microwave system for determining the water content in fuel oil. Microwave energy is directed through two test cells. The detected signals from these two test cells, together with the output of a third microwave detector which detects the microwave energy input into the two test cells, is used to provide output signals representative of the amount of water in a fluid passing through the test cells.

US-A-4774680 discloses a method and apparatus for determining the oil to water composition in an oil water mixture. A probe is used to transmit energy through the oil water mixture and the transmission characteristics are monitored. The measured values are compared to a predetermined value.

US-A-4257708 discloses an apparatus for measuring the amount of detergent in the water carried in a washing machine. Two light sources are used to produce light signals whose transmission characteristics are monitored. The first transmission characteristic is used to provide a reference signal to control the light output of the second light source.

According to one aspect of the present invention there is provided a device for measuring the concentration of two substances in a conduit as set forth in claim 1.

According to another aspect the present invention provides a method of measuring the concentration of two substances in a mixture as set forth in claim 7.

Embodiments of the present invention will now be described with reference to the accompanying drawings, in which:

Figure 1 shows the conduit and measuring system of one embodiment of the present invention

Figure 2A shows another embodiment of the present invention using a "patch" type antenna

Figure 2B shows an end view of Figure 2A;

Figure 2C shows a similar arrangement to Figure 2B but having a rectangular cross-section;

Figure 3 shows another embodiment of the present invention; and

Figure 4 shows another embodiment of the present invention using an insertion type probe.

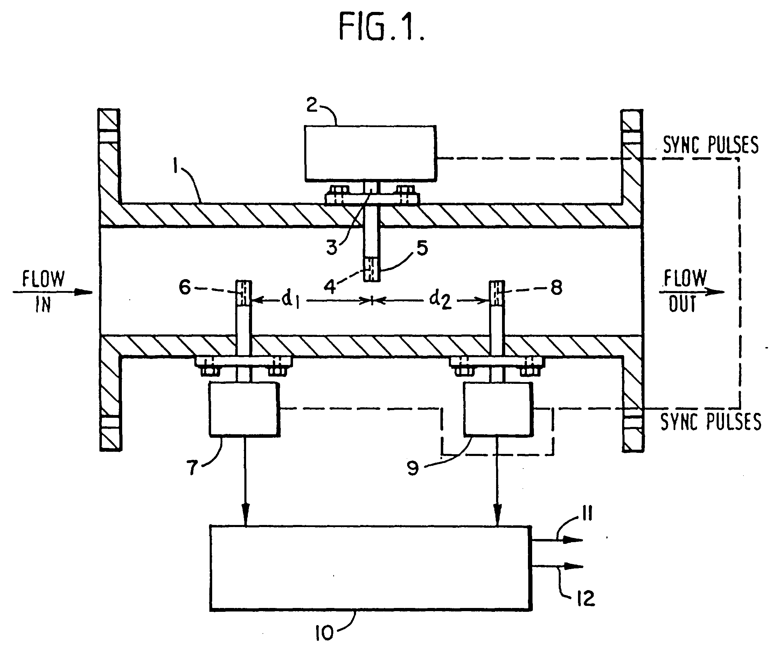

Fig. 1 describes such system which carries the dual purpose of measuring the hydrocarbon/water ratio and fluid velocity.

Figure 1 shows a conduit (1) for the fluid flow. the conduit (1) may have a circular or rectangular cross-section. Transmitter (2) transmits a high frequency signal via a coaxial cable (3) or a wave guide, to an antenna (4), which can be any known antenna such as a "horn", "patch", "monopole" or "dipole" antenna, which is insulated from the fluid by means of an insulator (5). Receivers (7) and (9) are connected to similar antennae arrangements (6) and (8), which are spaced from the transmitting antenna (4) distance "$d_1$" and "$d_2$" where

"$d_2$" is normally twice "$d_1$". A divider (10) divides the outputs of receivers (7) and (9) and supplies a linearized output of the ratio of $P_1/P_2$, wherein $P_1$ is the value of the signal received at (7) and $P_2$ is the value of the signal received at (9). Accordingly, either a vector ratio, a vector difference or the phase difference between the two receiving signals can be used to measure the concentration of the two substances to be measured. This linearizer may take the form of the curve selector linearizer, as disclosed in U.S. Patent 4,774,680.

The "electrical loading" or impedance of fluid acting on antenna (4) will vary with the electrical characteristics of the fluid (this phenomena was utilized in U.S. Patent 4,503,383) and thus the amount of energy transmitted will be affected by the nature of the fluid. The major problem with devices that utilize such measuring techniques is that the fluid and the surface of insulator (5) predominates the effect, in particular when the fluid consists of two immicible fluids such as water with a few drops of oil in it. It this mixture is not homogeneous, or the droplets size and coated thickness vary, the loading will be greatly affected by it.

Thus, if one can measure the bulk properties of this fluid, these problems are overcomed.

The present invention achieves these goals by measuring the ratio and/or the phase difference of the powers received by each receiver (7) and (9). As oil absorbs very little energy while water does, the amount of power received in each antenna is a function of the water content and the distance from the transmitting antenna. By taking the ratio and/or the phase difference of these signals, output (12) becomes independent of surface coating, etc. as both antennae (6) and (8) are exposed to the same fluid in exactly the same way. By installing the antennae axially with the flow, and in such a way that one receiving antenna receives its signal with the direction of the flow, while the other, which is equally spaced, receives its signal against the direction of flow, the phase difference between these two received signals is directly proportional to the flow's velocity.

By transmitting at a frequency where the phase difference between the two signals due to the dielectric constant of water $E = E' - jE''$ is maximum (around 2.45 GHz) the effect of salinity is greatly reduced. However higher frequencies can be used.

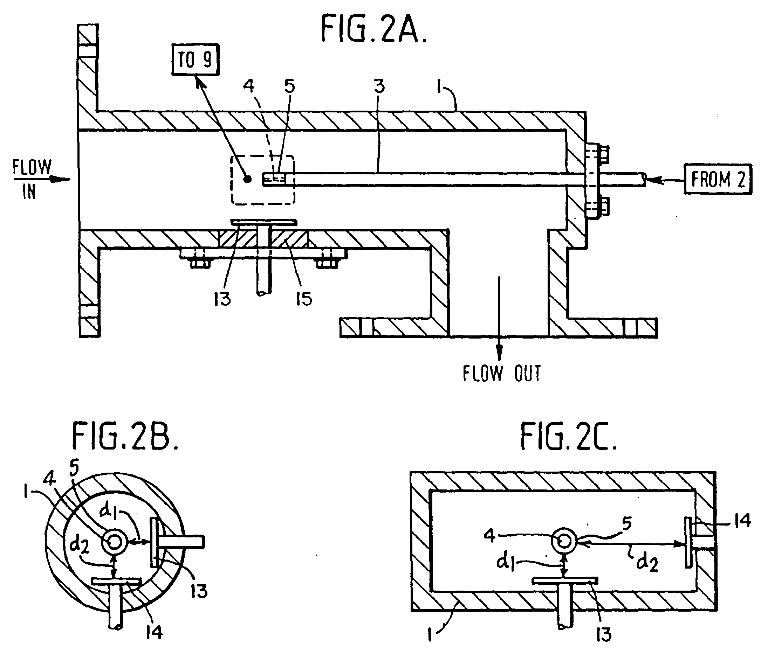

Fig. 2A shows another embodiment of the invention, according to which the receiving "monopole" antennae are replaced by two "patch" type (or similar) antennae.

All the other features such as the transmitter (2) and Phase Detector (10) of Fig. 1 are also common to Fig. 2A. The antennae arrangement in Fig. 2A is shown in 2 planes perpendicular to each other to demonstrate that two pairs of antennae can be used in any plane, not necessarily just opposite each other as shown in Fig. 1. Note that for clarity, only one pair is shown in Fig. 2A. The other pair is omitted for clarity sake. Also, only the "Patch" type is shown. Naturally, other types of known antennae configurations can be used, such as "horn", monopoles, dipoles, etc.

Fig. 2B shows an end view of Fig. 2A, where one monopole transmitter antenna (4) is used in the center and two receiving antennae (13) & (14). Fig. 2B shows a circular cross-section waveguide, while Fig. 2C shows a similar arrangement with a rectangular cross-section waveguide. Again, other types of conventional antennae can be used in this configuration such as two pairs of monopoles, "horn" type, etc. The transmitting antenna can be shared, or split into two separate ones. The advantage of two separate pairs is the elimination of cross-coupling between one receiving antenna and the other. The peripheral equipment surrounding the prime sensor is the same as shown in Fig. 1.

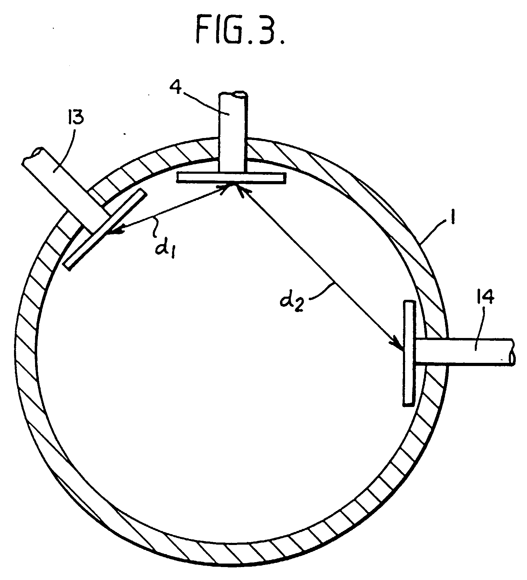

Fig. 3 shows another possible way to achieve the same end, using one dipole transmitting antenna 4, and two dipole receiving antennae 13,14. The drawing shows such arrangement in a circular wavelength 1. Naturally, the more conventional rectangular waveguide can also be used. Fig. 3 shows how to achieve the required differential distances $d_1$ and $d_2$ in one specific way. The antennae can be located in one plane, or spaced axially, too. Spacing the antennae axially lowers their cross-coupling which improves the linearity of the measured signal. Again, instead of sharing one transmitter antenna, two independent pairs can be used to further reduce the cross-coupling. The peripheral equipment is the same as shown in Fig. 1.

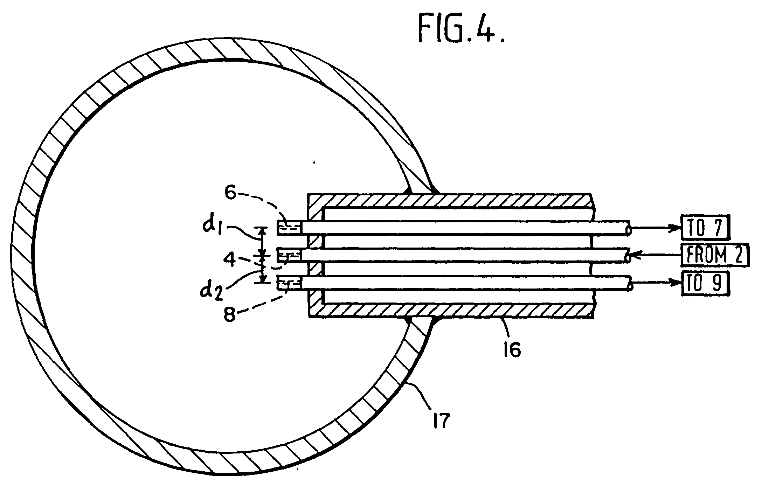

Fig. 4 shows an insertion-type.probe (16) inserted into a large conduit (17). Again, instead of the monopoles shown, dipoles and other type antennae can be used. Probe (16) is shown welded to pipe (17), but any other form of attachment can be used, e.g. the use of a seal-housing as described in U.S. Patent 4,503,383. Similar peripheral electronics as described in Fig. 1 can be used for signal conversion.

According to one aspect the present invention can provide a device for measuring the concentration of two substances through the transmission of electromagnetic waves, said device comprising:

(a) at least one transmission element for transmitting a signal;
(b) at least two receiving elements for receiving the signal from said at least one transmission element and providing first and second output signals, said at least two receiving elements being spaced at two separate distances from said transmission element; and
(c) means for receiving the first and second output signals from said at least two receiving elements, wherein the differences in the first and second output signals is utilized to determine the concentration of the two substances.

The difference in the first and second output signals can be a phase difference between the first and second output signals.

The phase difference between the first and second output signals can be used to determine the velocity of the fluid passing said at least two receiving elements.

The difference in the first and second output signals can be an amplitude difference between the first and second output signals.

The difference of the first and second output signals can be power difference between the first and second output signals.

The receiving elements are capable of being disposed in one or more planes.

The receiving elements and the transmission elements can be selected from the group consisting of a patch antennae, horn antennae, monopole antennae, and dipole antennae.

The transmission element and the receiving elements can be a probe means which can be inserted in the two substances.

The probe means can be capable of being disposed parallel to or perpendicular to the flow of the two substances.

The or each transmission element can transmit a pulsed signal.

The pulsed signal can synchronize the first and second output signals with the signal transmitted by said at least one transmission element.

According to another aspect the present invention provides a device for measuring the concentration of two substances through the transmission of electromagnetic waves, said device comprising:

(a) at least one transmission element for transmitting a signal;
(b) at least two receiving elements for receiving the signal from said at least one transmission element and providing first and second output signals, said at least two receiving elements being spaced at two separate distances from said transmission element; and
(c) means for receiving the first and second output signals from said at least two receiving elements, wherein a ratio of said first and second output signals is utilized to determine the concentration of the two substances.

The ratio of the first and second output signals can be an amplitude ratio of the first and second output signals.

The ratio of the first and second output signals can be a power ratio of the first and second output signals.

According to a further aspect the present invention provides a method of assessing a characteristic of a multi-component fluid, which comprises comparing a characteristic of at least two electromagnetic signals that have taken different paths through the fluid.

## Claims

1. A device for measuring the connections of two substances in a conduit (1) by means of the transmission of electromagnetic waves through a mixture of said two substances, said device comprising:

transmitter means (4) adapted for location within said conduit (1) and at a distance from inner walls thereof, and for transmitting electromagnetic waves through said mixture in said conduit (1);
first and second receiving elements (6,8) adapted for location within said conduit at distance from said inner walls of said conduit (1), for receiving the electromagnetic waves transmitted by said transmitter means (4) through a measurement region of said mixture in said conduit (1), and for providing respective first and second output signals, wherein said receiving elements (6,8) are arranged at positions two different distances $(d_1, d_2)$ from said transmitter means (4); and
processing means (10) adapted to receive the first and second output signals as the only variables obtained by means of transmission and reception of electromagnetic waves of a single predetermined frequency through said measurement region of said mixture in said conduit (1) and to determine the concentration of the two substances by taking the difference of the first and second output signals.

2. A device according to claim 1, wherein said processing means (10) comprises:

means for determining the concentrations of the two substances by taking the phase difference of the received first and second output signals.

3. A device according to claim 1, wherein said processing means (10) comprises:

means for determining the concentrations of the two substances by taking the amplitude difference between the received first and second output signals.

4. A device according to claim 1, wherein said processing means (10) comprises means for determining the concentration of the two substances by taking the power difference between the received first and second output signals.

5. A device according to any preceding claim, wherein said transmitter means (4) is arranged to transmit a signal having a frequency of around 2.45 GHz or higher through said mixture of said two substances.

6. A device according to any preceding claim, wherein said first receiving element (8) is arranged at least twice as far away from said transmitter means (4) as said second receiving element (6).

7. A method of measuring the concentrations of two substances in a mixture of said two substances in a conduit (1), the method comprising the steps of:

transmitting electromagnetic waves through said mixture in said conduit (1) using transmitter means (4) located within said conduit (1) at a distance from walls thereof; receiving the electromagnetic waves transmitted by said transmitter means (4) through a measurement region of said mixture in said conduit (1) at a distance from said walls thereof using first and second receiving elements (6,8) located within said conduit (1) and spaced from said walls thereof at positions two different distances ($d_1, d_2$) from said transmitter means (4) to provide respective first and second output signals; and using said first and second output signals as the only variables obtained by means of transmission and reception of electromagnetic waves of a single predetermined frequency through said measurement region of said mixture in said conduit (1) to determine the concentrations of the two substances by taking the difference of the first and second output signals.

8. A method according to claim 7, wherein the concentrations of the two substances are determined by taking the phase difference between the first and second output signals.

9. A method according to claim 7, wherein the concentrations of the two substances are determined by taking the amplitude difference between the first and second output signals.

10. A method according to claim 7, wherein the concentrations of the two substances are determined by taking the power difference between the first and second output signals.

11. A method according to any one of claims 7 to 10, wherein the electromagnetic waves which are transmitted have a frequency of around 2.45 GHz or higher.

12. A method according to any one of claims 7 to 11, wherein said first receiving element (8) is arranged at least twice as far away from said transmitter means (4) as said second receiving element (6).

# FIG.1.

SYNC PULSES

FLOW IN

FLOW OUT

SYNC PULSES

$d_1$

$d_2$

EP 0 962 761 A2

FIG.2A.

FROM 2

FLOW IN

TO 9

FLOW OUT

1
3
4
5
13
15

FIG.2B.

$d_1$
$d_2$
4
5
1
13
14

FIG.2C.

4
5
$d_1$
$d_2$
13
14
1

# FIG.3.

EP 0 962 761 A2

# FIG.4.

$d_1$

$d_2$

6

4

8

TO 7

FROM 2

TO 9

16

17